# DEMANDE DE BREVET EUROPEEN

(11) **EP 1 818 317 A1**
(43) Date de publication de la demande: **15.08.2007**
(21) Numéro de dépôt: 07101774.3
(22) Date de dépôt: 06.02.2007
(51) Int. Cl.: C03C 15/00, C03C 19/00, C03C 23/00, B24B 1/00, B24C 1/06

(54) **Procede de fabrication d'un substrat verrier presentant un aspect satine**

(30) Priorité: 13.02.2006 FR 0650497
(71) Demandeur: Saint-Gobain Glass France S.A., 92400 Courbevoie (FR)
(72) Inventeur: Bargioni, Luc, 56121, PISA (IT)
(74) Mandataire: Colombier, Christian

(57) **Abrégé**

Procédé de fabrication d'un substrat, notamment verrier, présentant un aspect de surface, notamment satiné, sur l'une au moins de ses faces, caractérisé en ce qu'au moins une portion de surface dudit substrat subit un traitement de surface par pulvérisation d'un produit pulvérulent dont la valeur en unité Mesh est comprise entre 35 et 325, ce traitement de surface étant effectué préalablement au traitement de surface par voie chimique.

## Description

La présente invention est relative à un procédé de fabrication d'un substrat, notamment verrier, présentant un aspect satiné ou dépoli.

Il est usuel d'obtenir de tels substrats à la suite d'un traitement de surface de l'une des faces, d'un substrat clair, extra-clair ou teinté. Un substrat dépoli à l'acide se distingue par un aspect satiné parfaitement homogène. Néanmoins translucide, ce substrat laisse passer la lumière tout en protégeant des regards les espaces intérieurs.

Le substrat à la surface duquel le traitement de surface est appliqué est d'une manière connue d'un substrat de type verrier résultant d'une fabrication sur « float ».

On rappelle que le verre float est obtenu à partir d'une composition de matière vitrifiable apportée à une température permettant la fusion (classiquement de l'ordre de 1400 à 1550 °C) de cette matière vitrifiable jusqu'à obtenir un bain liquide. Ce bain liquide est déversé sur de l'étain fondu à 1000 °C environ. Compte tenu des masses volumiques différentes entre l'étain et le bain liquide de verre, ce dernier flotte sur celui-ci et forme un ruban d'une épaisseur naturelle de 6 à 7 mm. Les faces du ruban de verre sont polies par la surface de l'étain (et on définit cette face du substrat comme la face étain) et par la flamme sur l'autre face du substrat (on définit alors cette face comme la face atmosphère).

Des dispositifs permettent d'accélérer ou de diminuer l'étalement du verre afin d'en maîtriser l'épaisseur.

A la sortie du bain d'étain, le ruban devenu rigide chemine au travers de l'étenderie au travers duquel la température du ruban passe de 650 à 250°C. Le refroidissement lent se poursuit alors à l'air libre permettant de libérer toutes les contraintes internes du verre, qui risqueraient de provoquer de sa casse lors de la découpe.

Le ruban froid, jusqu'ici continu, est alors découpé en plateaux appelés PLF ou DLF selon leur taille et stockés en piles.

Ceux sont ces plateaux de verre teinté, clair, extra-clair qui sont repris, éventuellement après avoir subi une autre découpe, et dirigés vers l'unité de traitement de surface chargée de dépolir, après passage dans un bain d'un agent de traitement de surface (notamment acide fluorhydrique) ou par une pulvérisation de ce même agent de surface de l'une des faces du substrat, l'autre face étant protégée par un revêtement protecteur (généralement par une cire) afin de ne pas être attaquée par l'agent de traitement de surface, ce passage dans le bain d'agent de traitement de surface pouvant être réalisé plusieurs fois, selon diverses concentrations dudit agent.

Les inventeurs ont constaté que la face ainsi traitée, bien que disposant d'un aspect satiné et/ou dépoli satisfaisant, présentait une sensibilité à la rayure, ce qui rend le produit fragile et limite ses possibilités d'utilisation.

La présente invention vise donc à pallier les inconvénients du procédé précédent en proposant un traitement qui supprime visuellement, voire qui limite au maximum les conséquences visibles des effets des agressions mécaniques sur la surface, notamment des agressions mécaniques résultant de rayure.

A cet effet le procédé de fabrication d'un substrat, notamment verrier, présentant un aspect de surface, notamment satiné, sur l'une au moins de ses faces, caractérisé en ce qu'au moins une portion de surface dudit substrat subit un traitement de surface par pulvérisation d'un produit pulvérulent dont la valeur en unité Mesh est comprise entre 35 et 325, ce traitement de surface étant effectué préalablement au traitement de surface par voie chimique.

Grâce à ce traitement de surface par pulvérisation ou grenaillage d'un produit pulvérulent, préalablement aux étapes de traitement de surface par voie chimique, on obtient une amélioration significative des propriétés de résistance à la rayure.

Dans des modes de réalisation préférés de l'invention, on peut éventuellement avoir recours en outre à l'une et/ou à l'autre des dispositions suivantes :
- on applique le traitement de surface simultanément ou successivement sur chacune des faces du substrat,
- on pulvérise un produit pulvérulent à base d'oxyde d'aluminium,
- on pulvérise un produit pulvérulent à base de Corindon blanc,
- on pulvérise un produit pulvérulent à base de Corindon rouge brun,
- la pulvérisation s'effectue par voie humide,
- la pulvérisation s'effectue par voie sèche,
- on applique le procédé sur un substrat coloré, teinté, éventuellement bullé,

D'autres caractéristiques et avantages de l'invention apparaîtront au cours de la description suivante donnée à titre d'exemples non limitatifs, illustrée par les figures suivantes :
- les figures 1A, 1B, 1C sont des photographies d'un substrat ayant subi un traitement par voie chimique,
- les figures 2A, 2B, 2C sont des photographies d'un substrat ayant subi deux traitements consécutifs par voie chimique,
- les figures 3A, 3B, 3C sont des photographies d'un substrat ayant subi un traitement de surface à l'aide d'un produit pulvérulent,
- les figures 4A, 4B, 4C sont des photographies d'un substrat ayant subi le traitement appliqué au substrat des figures 3a, 3b, 3, préalablement aux traitements par voie chimique appliqués aux figures 2a, 2b, 2c,
- la figure 5 représente l'échelle optométrique Monoyer 5 m.

Selon un mode préféré de mise en oeuvre du procédé objet de l'invention, on opère à partir d'un plateau ou d'un substrat à fonction verrière obtenu à partir d'un procédé d'élaboration de type traditionnel. Il s'agit de plaque au format PLF ou DLF résultant de la découpe d'un ruban de verre issu d'un bain float comme cela a été mentionné précédemment.

Les substrats sont dans une enceinte au sein de laquelle on applique une projection du produit pulvérulent selon une voie sèche et avec des conditions opératoires suivantes : température ambiante et la vitesse de traitement est comprise entre 0.15 et 0.50 m²/min.

A titre d'exemple, il s'agit communément appelé du Corindon blanc à base d'un mélange comprenant majoritairement de l'oxyde d'aluminium (Al₂O₃ /99.80 %), puis en quantité plus réduite de la silice (SiO₂ /0.023 %), de l'oxyde de fer (Fe₂O₃/ 0.035 %), de l'oxyde de titane (TiO₂/ 0.006 %), de l'oxyde de calcium (CaO /0.01%), et de l'oxyde de sodium (Na₂O /0.15 %).

En variante on peut utiliser un mélange appelé Corindon rouge brun, comprenant majoritairement de l'oxyde d'aluminium (Al₂O₃ /95.80 %), puis en quantité plus réduite de la silice (SiO₂ /0.70 %), de l'oxyde de fer (Fe₂O₃/ 0.20 %), de l'oxyde de titane (TiO₂/ 2.80 %), de l'oxyde de calcium (CaO /0.20%), et de l'oxyde de sodium, de magnésium, et potassium sous forme de trace.

Quel que soit le type de Corindon utilisé, on choisit préférentiellement un mélange dont la granulométrie correspond à une valeur de Mesh comprise entre 35 et 325. On rappelle que la valeur exprimée en «Mesh » est définie comme le nombre d'ouvertures par pouce carré.

L'une des faces de ce substrat, voire les deux simultanément ou successivement ou encore une portion de surface de l'une ou l'autre des faces est donc soumise dans cette enceinte à ce traitement de surface.

Après sablage, le substrat présente à sa surface de nombreuses particules de produit pulvérulent (dans le cas d'espèce du Corindon) qui seront éliminées par une phase de lavage et de brossage au sein d'une machine à laver.

Après lavage et élimination des résidus de la phase de traitement de surface par pulvérisation de Corindon ou similaire, au moins une portion de surface du substrat subit un traitement de surface par voie chimique. Ce traitement de surface comporte une étape dans laquelle au moins une portion de surface du substrat est décapée ou attaquée chimiquement, à l'aide d'une solution aqueuse d'acide fluorhydrique selon les mécanismes suivants :

H⁺ + F⁻ + SiO₂ > [SiF₆]²⁻ + H₂O

Suivi d'une étape selon laquelle il y a création de précipité selon le mécanisme suivant :

[SiF₆]²⁻ + NH₄⁺ > [NH₄]₂ [SiF₆]

On peut obtenir une surface brillante ou mate. Ce procédé relativement ancien a été décrit par le chimiste américain Benjamin Tilgham, dans les années 1870.

Suivant le degré d'aspect satiné ou dépoli recherché, on utilise plusieurs bains de traitement chimique, comportant chacun des concentrations différentes en acide fluorhydrique et en en fluorure.

Après traitement chimique (passage dans au moins un bain, voire deux), le substrat est réintroduit dans la machine à laver et est ensuite séché.

Les inventeurs se sont aperçus qu'il était possible de quantifier l'aspect dépoli ou satiné obtenu par ce procédé de traitement de surface.

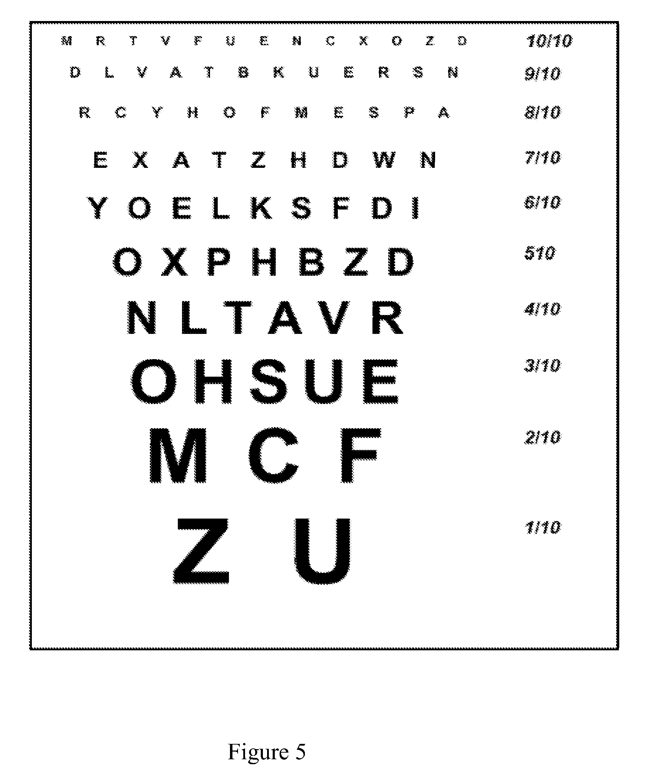

A cette fin, on utilise l'échelle Optométrique Monoyer 5 m qui est couramment rencontrée chez les ophtalmologistes pour mesurer l'acuité visuelle de loin (se reporter à la figure 5). Il existe également l'échelle optométrique Monoyer 3 m qui fonctionne sur le même mode que la précédente.

Cette échelle optométrique MONOYER comporte 10 lignes de lettres. Chaque ligne correspond à 1/10 d'acuité visuelle. L'utilisateur doit se placer à 5 mètres de l'échelle utilisée

On connaît d'autres systèmes basés sur le même mode d'interprétation (à titre non limitatif (test de PIGASSOU, test d'ARMAIGNAC, de LANDOLT, test à main de PARINEAU)

Le mode opératoire est le suivant :
- la table de MONOYER (à 5 m) est placée sur un mur à la lumière du jour,
- le substrat ayant subi le traitement de surface (produit pulvérulent, traitement chimique, produit pulvérulent + traitement chimique (à au moins un bain, voire deux) est positionné en regard de la table de MONOYER à une distance de 4 cm, la face traitée en regard de la table
- l'observateur, disposant d'une acuité visuelle normale, se positionne à une distance moyenne comprise entre 1 et 5 m, notamment à une distance moyenne de 3 m (qui correspond en fait à une distance que l'on peut rencontrer dans un laboratoire de contrôle) de la table de MONOYER supportant l'échantillon, et sensiblement dans son axe
- dans l'échelle MONOYER, l'utilisateur lit le chiffre de 1 à 10 qu'il est capable de lire en fonction de l'intensité du dépoli ou du satiné,
- dans cette échelle, au plus deux lettres mal lues sur la ligne, valident cette ligne
   Suivant les traitements effectués, il est possible d'encadrer les niveaux de dépoli ou de satiné obtenus.
- substrat ayant subi, sur une face, 1 seul traitement chimique : 3 (± 1)
- substrat ayant subi, sur une face, 2 traitements chimiques: 8 (± 1)
- substrat ayant subi, sur une face, au préalable aux deux traitements chimiques, un traitement mécanique supplémentaire 4 (± 1).

Les inventeurs se sont aperçus que les substrats ainsi traités présentaient une amélioration significative des propriétés de résistance à la rayure, ou du moins que les rayures réalisées étaient moins visibles.

On a ainsi soumis un substrat à divers traitements de surface chimique et mécanique. Pour une même substrat, on réalise une rayure à l'aide d'un objet métallique, une photographie est prise avant cette rayure (photographies avec l'indice A), une seconde photographie est prise après avoir effectué la rayure (photographies avec l'indice B), une troisième photographie est prise après nettoyage de la zone rayée (photographies avec l'indice C).

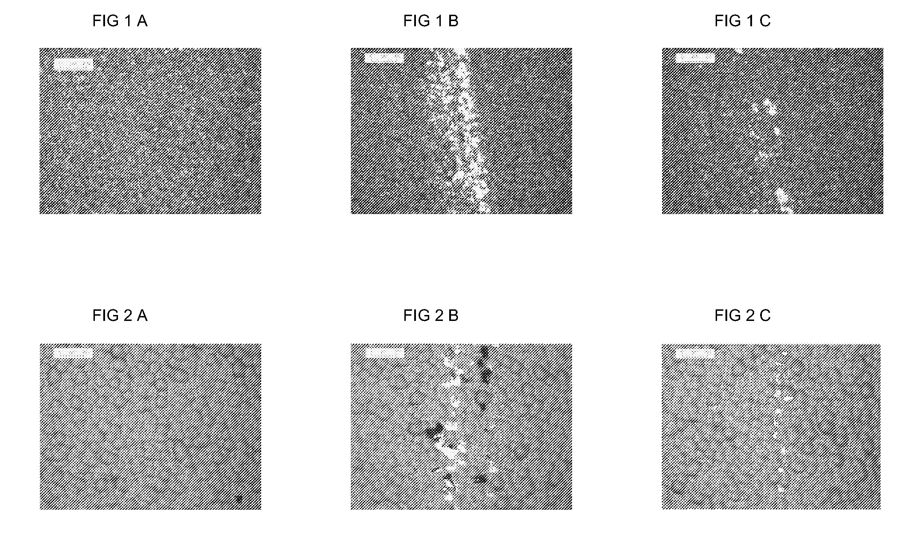

Lors de la rayure avec un objet métallique, on observe un dépôt de métal sur la surface rayée. Ce dépôt est réfléchissant et rend la rayure très visible.(figures 1B, 2B, 3b dans une moindre mesure).

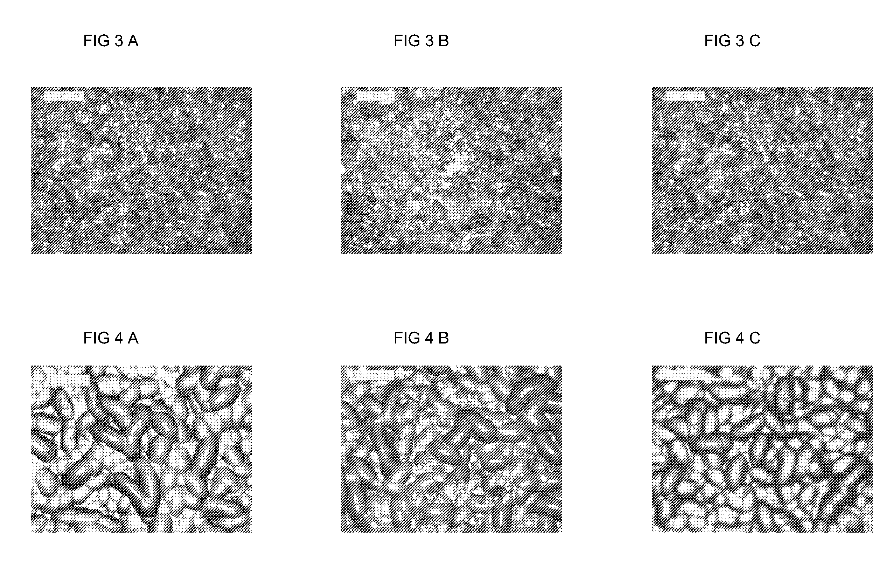

Sur les substrats ayant une attaque chimique (figure 1 C) et sur le substrat ayant subi une attaque mécanique - pulvérisation de CORINDON - (figure 3C), même après nettoyage par frottement de la surface, du métal reste emprisonné dans les aspérités de la surface et les rayures restent visibles.

Pour un substrat ayant subi tous les traitements mécanique (pulvérisation d'oxyde d'aluminium) et chimiques (double attaque), la structure du produit étudié est au contraire grande et au relief doux. Cette surface est ainsi facile à nettoyer. Lorsque l'on frotte la zone rayée, on parvient à enlever les dépôts métalliques et la rayure n'est plus visible.(cf. figure 4C).

On donne ci-après les valeurs de rugosité exprimée respectivement pour Ra (profondeur moyenne), Rsm (pas moyen) et Rdq (pente moyenne)

| | Ra (GS 0.8 mm) µm | écart-type µm | écart-type % |
|---|---|---|---|
| **2 traitements chimiques** | 1,24 | 0,07 | 5,9 |
| **1 traitement chimique** | 1,65 | 0,11 | 6,4 |
| traitement pulvérulent | 1,06 | 0,08 | 7,64 |

| | RSm (GS 0.8 mm) µm | écart-type µm | écart-type % |
|---|---|---|---|
| **2 traitements chimiques** | 105,41 | 8,16 | 7,7 |
| **1 traitement chimique** | 96,37 | 7,98 | 8,3 |
| traitement pulvérulent | 68,92 | 6,52 | 9,46 |

| | Rdq (GS 0.8 mm)° | écart-type° | écart-type % |
|---|---|---|---|
| **2 traitements chimiques** | 5,78 | 0,30 | 5,1 |
| **1 traitement chimique** | 9,30 | 0,78 | 8,4 |
| traitement pulvérulent | 8,78 | 0,49 | 5,61 |

En conclusion de ces tableaux, le traitement à l'aide du produit pulvérulent garantit un état de surface très lisse comparé à ceux obtenus par les voies chimiques, et sa rugosité arithmétique est comprise entre 1 et 1.10 µm.

Le substrat résultant de ce procédé de fabrication peut être utilisé en tant que un élément de façade, un aménagement d'intérieur, une cloison, un mobilier, des meubles de vente, des présentoirs, des portes, des vitrines, des éléments de décoration dans des cuisines, salle de bain, fenêtre. Ces éléments constituent des vitrages ou des portions de vitrage intérieur ou extérieur.

## Revendications

1. Procédé de fabrication d'un substrat, notamment verrier, présentant un aspect de surface, notamment satiné, sur l'une au moins de ses faces, **caractérisé en ce qu'**au moins une portion de surface dudit substrat subit un traitement de surface par pulvérisation d'un produit pulvérulent dont la valeur en unité Mesh est comprise entre 35 et 325, ce traitement de surface étant effectué préalablement au traitement de surface par voie chimique.

2. Procédé selon la revendication 1, **caractérisé en ce qu'**on applique le traitement de surface par pulvérisation simultanément ou successivement sur chacune des faces du substrat.

3. Procédé selon l'une des revendications 1 ou 2, **caractérisé en ce qu'**on pulvérise un produit pulvérulent à base d'oxyde d'aluminium.

4. Procédé selon l'une des revendications précédentes, **caractérisé en ce qu'**on pulvérise un produit pulvérulent à base de Corindon blanc.

5. Procédé selon l'une des revendications 1 à 3, **caractérisé en ce qu'**on pulvérise un produit pulvérulent à base de Corindon rouge brun.

6. Procédé selon l'une des revendications précédentes, **caractérisé en ce que** la pulvérisation s'effectue par voie humide.

7. Procédé selon l'une des revendications 1 à 5, **caractérisé en ce que** la pulvérisation s'effectue par voie sèche.

8. Procédé selon l'une des revendications précédentes, **caractérisé en ce qu'**il est appliqué sur un substrat coloré, teinté, éventuellement bullé.

9. Utilisation d'un substrat obtenu par la mise en oeuvre du procédé selon l'une quelconque des revendications précédentes, **caractérisée en ce qu'**il est utilisé en tant qu'élément de façade, un aménagement d'intérieur, une cloison, un mobilier, des meubles de vente, des présentoirs, des portes, des vitrines, des éléments de décoration pour cuisines, salle de bain, fenêtre.

10. Substrat obtenu par la mise en oeuvre du procédé selon l'une quelconque des revendications 1 à 8, **caractérisé en qu'**il présente dans l'échelle Monoyer 5 m, une valeur de 4 (± 1).

11. Substrat obtenu par la mise en oeuvre du procédé selon l'une quelconque des revendications 1 à 8, **caractérisé en qu'**il présente une rugosité arithmétique (Ra) comprise entre 1 et 1.10 µm.
